# EUROPÄISCHE PATENTSCHRIFT

(11) **EP 3 736 154 B1**
(45) Veröffentlichungstag und Bekanntmachung des Hinweises auf die Patenterteilung: **21.09.2022**
(21) Anmeldenummer: 20160343.8
(22) Anmeldetag: 02.03.2020
(51) Int. Cl.: B60K 6/46, B60K 25/02, B62D 55/00, E01H 4/02, B60K 6/26, B60K 6/34

(54) **PISTENRAUPE**
PISTE CATERPILLAR
ENGIN DE DAMAGE DE PISTES

(30) Priorität: 06.05.2019 DE 102019206459
(43) Veröffentlichungstag der Anmeldung: 11.11.2020
(73) Patentinhaber: Kässbohrer Geländefahrzeug AG, 88471 Laupheim (DE)
(72) Erfinder: Kuhn, Michael, 88480 Achstetten (DE)
(74) Vertreter: Patentanwälte Ruff, Wilhelm, Beier, Dauster & Partner mbB

(56) Entgegenhaltungen:
- EP-A1- 2 450 214
- WO-A1-2010/103117
- WO-A1-2012/085882
- WO-A2-2008/042319

## Beschreibung

Die Erfindung betrifft eine Pistenraupe mit einem Verbrennungsmotor sowie mit zwei zueinander parallel geschalteten elektrischen Generatoren mit gleicher Leistung, die mittels einer Leistungselektronik mit elektrischen Fahrmotoren für einen Kettenantrieb verbunden sind, sowie mit einem Funktionsantrieb für eine Heckfräse oder eine Winde.

Eine derartige Pistenraupe ist zur Bearbeitung und Pflege von Schneeoberflächen, insbesondere zur Gestaltung von Ski- und Snowboardpisten, zur Gestaltung von Funparks oder zur Pflege entsprechender Ski- oder Snowboardpisten oder Funparks vorgesehen.

Aus der DE 10 2010 043 511 A1 ist eine Pistenraupe mit einem als Dieselmotor ausgeführten Verbrennungsmotor bekannt, der über ein Verteilergetriebe zwei parallel geschaltete Generatoren antreibt. Die beiden Generatoren sind mit elektrischen Fahrmotoren wie auch mit elektrischen Funktionsantrieben für eine Heckfräse und/oder eine Winde verbunden, um sowohl den Fahrantrieb als auch den entsprechenden Funktionsantrieb elektrisch zu gestalten. Die entsprechenden Elektromotoren für die Fahrantriebe oder den wenigstens einen Funktionsantrieb können bei Bergabfahrt, d.h. im Schubbetrieb, als Generatoren wirken. Entsprechende, dadurch entstehende elektrische Leistung muss bei einer praktischen Ausführung einer solchen Pistenraupe abgepuffert werden. Hierzu sind sogenannte Brems-Chopper vorgesehen. Um keine Überhitzung dieser Brems-Chopper zuzulassen, müssen diese Brems-Chopper gekühlt werden. Die Kühlung erfolgt über Kühlkreisläufe, die über den Dieselmotor aktiviert werden.

Aus der WO 2010/103117 A1 ist eine Pistenraupe bekannt, die einen Verbrennungsmotor und einen rein hydraulischen oder alternativ rein elektrischen Antriebsstrang für einen Kettenantrieb und einen Funktionsantrieb enthält.

Aufgabe der Erfindung ist es, eine Pistenraupe der eingangs genannten Art zu schaffen, deren Energiemanagement gegenüber bekannten Pistenraupen verbessert ist.

Diese Aufgabe wird dadurch gelöst, dass der Funktionsantrieb hydraulisch ausgeführt ist, und dass die Generatoren mechanisch mit einem Verteilergetriebe gekoppelt sind, das mit dem hydraulischen Funktionsantrieb verbunden ist. Durch die erfindungsgemäße Lösung ist es möglich, ein verbessertes Energiemanagement für die Pistenraupe zu erzielen. Bei Bergabfahrt wirken die elektrischen Fahrmotoren des Kettenantriebs als Generatoren, die die beiden Generatoren speisen, die nunmehr als elektrische Motoren agieren. Die Generatoren stützen sich mechanisch an dem Verteilergetriebe ab, das wiederum mit dem hydraulischen Funktionsantrieb gekoppelt ist. Durch die Fahrmotoren bei Bergabfahrt entstehende elektrische Energie wird demzufolge über die Generatoren, die als mechanisch mit dem Verteilergetriebe gekoppelte elektrische Motoren wirken, übertragen. Die auf das Verteilergetriebe übertragene mechanische Energie dient zum Antrieb der Hydraulikpumpe des hydraulischen Funktionsantriebs, so dass die in mechanische Energie umgewandelte elektrische Energie der Fahrmotoren zur Speisung des hydraulischen Funktionsantriebs dient. Dadurch wird der bei Bergabfahrt anfallende, elektrische Energieüberschuss reduziert oder vollständig aufgebraucht. Die Abpufferung elektrischer Energie in einem Brems-Chopper wird hierdurch zwangsläufig reduziert. Damit ergibt sich auch eine Reduzierung der notwendigen Kühlleistung für einen solchen Brems-Chopper. Dies führt zu einem reduzierten Kraftstoffverbrauch des Verbrennungsmotors, insbesondere des Dieselmotors, da dieser für den Brems-Chopper weniger Kühlleistung aufbringen muss als dies beim Stand der Technik der Fall ist.

Das Vorsehen von zwei Generatoren mit gleicher Leistung ermöglicht einen redundanten Aufbau des elektrischen Fahrantriebs, so dass auch bei Ausfall eines Generators der Kettenantrieb immer noch funktionsfähig ist, um die Pistenraupe bis zum nächsten Servicepunkt fahren zu können.

Ein Brems-Chopper, wie er bei der erfindungsgemäßen Lösung zur Abpufferung der elektrischen Energie eingesetzt ist, ist in der DE 20 2010 017 000 U1 bekannt. Bezüglich Aufbau und Funktion des Brems-Choppers wird daher auf die Offenbarung dieses Standes der Technik verwiesen.

Gemäß der Erfindung ist das Verteilergetriebe dem Verbrennungsmotor zugeordnet, an dem abtriebsseitig mechanisch die Generatoren sowie eine Hydraulikpumpe des hydraulischen Funktionsantriebs angeschlossen sind. Hierdurch wird überschüssige elektrische Energie in mechanische Energie umgewandelt, die zum Betrieb der Hydraulikpumpe eines entsprechenden Hydraulikkreislaufs für den hydraulischen Funktionsantrieb dient.

In weiterer Ausgestaltung der Erfindung weist der hydraulische Funktionsantrieb wenigstens einen Hydraulikmotor auf, der einer Fräswellenanordnung der Heckfräse für einen rotatorischen Antrieb der Fräswellenanordnung zugeordnet ist. Die Fräswellenanordnung kann eine oder mehrere Fräswellen aufweisen, die durch einen einzelnen oder durch mehrere Hydraulikmotoren angetrieben sind.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Draufsicht eine Ausführungsform einer erfindungsgemäßen Pistenraupe mit einem strichpunktiert angedeuteten Antriebssystem und
- Fig. 2: in einem vergrößerten Blockschaltbild das Antriebssystem der Pistenraupe nach Fig. 1.

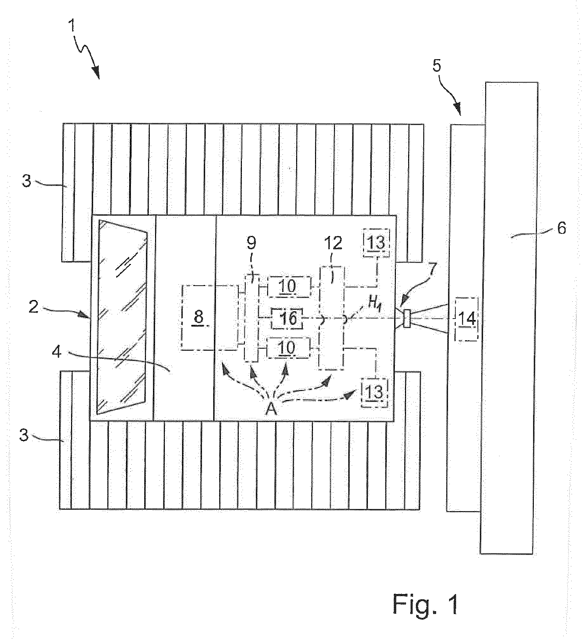

Eine Pistenraupe 1 nach Fig. 1 weist einen Fahrzeugrahmen 2 auf, auf dem in grundsätzlich bekannter Weise eine Fahrerkabine 4 angeordnet ist. Die Pistenraupe 1 weist auf gegenüberliegenden Seiten jeweils eine Fahrkette 3 auf, die gemeinsam einen Kettenantrieb und damit einen Fahrantrieb für die Pistenraupe 1 übernehmen. Jede Fahrkette 3 ist über ein nicht näher dargestelltes Turasrad in einem Heckbereich des Fahrzeugrahmens antreibbar.

Heckseitig weist der Fahrzeugrahmen einen Heckgeräteträger 7 auf, an dem beim dargestellten Ausführungsbeispiel eine Heckfräse 5 gehalten ist. Die Heckfräse 5 weist eine Finisher-Anordnung 6 auf, die zum Glätten der durch die Fahrketten und eine Fräswellenanordnung der Heckfräse 5 aufgearbeiteten Schneeoberfläche dient.

Zum Antreiben der Pistenraupe 1 ist ein Antriebssystem A vorgesehen, das zumindest weitgehend in dem Fahrzeugrahmen integriert ist. Das Antriebssystem A stellt ein Hybridantriebssystem dar, wobei ein Verbrennungsmotor in Form eines Dieselmotors 8 mit einer elektrischen Antriebseinheit wie auch mit einer hydraulischen Antriebseinheit kombiniert ist.

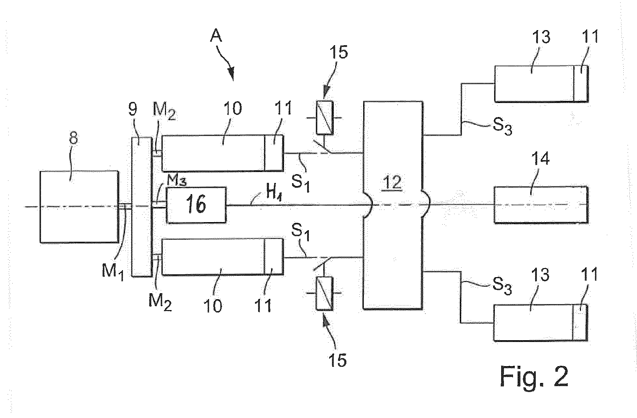

Anhand der Fig. 1 und 2 ist erkennbar, dass an dem Dieselmotor 8 ein Verteilergetriebe 9 angeflanscht ist, das mechanisch mit dem Dieselmotor 8 wirkverbunden ist. Die mechanische Wirkverbindung wird durch das Bezugszeichen M₁ verdeutlicht. Das Verteilergetriebe 9 weist gegenüberliegend zu dem Dieselmotor 8 drei Abtriebsstränge auf. Dabei sind zwei Abtriebsstränge in Form jeweils einer mechanischen Wirkverbindung M₂ mit jeweils einem Generator 10 mechanisch verbunden. Jeder der beiden Generatoren 10 weist die gleiche Leistung auf und bildet eine elektrische Maschine, die sowohl als Generator als auch als Motor betreibbar ist. Eine die mechanische Wirkverbindung M₁ bildende Antriebswelle des Dieselmotors 8 steht demzufolge über das Verteilergetriebe 9 mechanisch mit entsprechenden Wellen der beiden Generatoren 10 in Verbindung. Die beiden Generatoren 10 sind identisch ausgeführt und in Parallelschaltung zueinander an dem Verteilergetriebe 9 angeflanscht. Beiden Generatoren ist jeweils ein integrierter Frequenzumrichter 11 zugeordnet, so dass beide Generatoren 10 über jeweils eine elektrische Verbindung S₁ eine Leistungselektronik 12 mit Gleichstrom speisen. An die Leistungselektronik 12 sind zwei Elektromotoren angeschlossen, die jeweils einen Fahrmotor 13 für den Kettenantrieb bilden. Dabei sind die beiden Fahrmotoren 13 zum Antrieb der Turasräder der rechts- und linksseitigen Fahrketten 3 vorgesehen. Auch die Fahrmotoren 13 bilden elektrische Maschinen, die sowohl als Generator als auch als Motor betrieben werden können. Beiden Fahrmotoren 13 sind Permanentsynchronmotoren, die mit einer Spannung von 750 V Gleichstrom arbeiten. Den Fahrmotoren 13 können in gleicher Weise Frequenzumrichter 11 zugeordnet sein, wie dies bei den Generatoren 10 der Fall ist. Die Generatoren 10 wie auch die Fahrmotoren 13 weisen jeweils eine Leistung von 140 kW auf. Da die beiden Generatoren 10 in Parallelschaltung betrieben werden, ergibt sich die Funktion eines Doppelgenerators mit einer Leistung von 280 kW.

Wie anhand der Fig. 2 erkennbar ist, ist jede elektrische Leitung S₁ zwischen dem jeweiligen Generator 10 und der Leistungselektronik 12 über ein als elektrisches Schaltelement dienendes Relais 15 abtrennbar. Das jeweilige Relais 15 wird in Abhängigkeit von einer Funktionsüberwachung des zugeordneten Generators 10 angesteuert. Die Funktionsüberwachung kann über die Leistungselektronik 12 oder über eine separate elektronische Steuereinheit erfolgen. Die Ansteuerung des jeweiligen Relais 15 erfolgt dann, wenn eine Fehlfunktion oder ein Ausfall des entsprechenden Generators 10 erkannt wurde. Das Relais 15 in der jeweiligen Leitung S₁ trennt dann die elektrische Verbindung zwischen dem Generator 10 und der Leistungselektronik 12. Aufgrund des redundanten Aufbaus verbleibt nach Abtrennen des einen Generators noch der zweite Generator, mit dem zumindest ein Notlaufbetrieb der Fahrmotoren 13 des Antriebssystems A ermöglicht ist. Dadurch kann die Pistenraupe auch bei Ausfall eines Generators zumindest noch bis zum nächsten Servicepunkt gefahren werden.

Die Leistungselektronik 12 oder eine nicht dargestellte Steuereinheit umfasst Fahrantriebsregler für die Fahrmotoren 13 des Kettenantriebs wie auch ein durch den Fahrer aktivierbares Sollwerteingabemodul und verschiedene elektronische Leistungsbereitstellungsmodule, die entsprechende Sollwerte mit durch Überwachungseinheiten ermittelten Ist-Werten vergleichen und abhängig von einem Ergebnis der Auswertung die Regler entsprechend ansteuern.

Wie anhand der Fig. 1 und 2 erkennbar ist, wird die Heckfräse 5 hydraulisch betrieben. Die Heckfräse 5 weist eine Fräswellenanordnung auf, die beim dargestellten Beispiel durch eine einzelne Fräswelle gebildet ist. Bei nicht dargestellten Ausführungsbeispielen können mehrere Fräswellen die Fräswellenanordnung bilden. Pro Fräswelle ist ein Hydraulikmotor 14 vorgesehen. Beim dargestellten Ausführungsbeispiel wird die Fräswelle demzufolge durch den Hydraulikmotor 14 angetrieben. Der Hydraulikmotor 14 ist über eine Hydraulikleitung H₁, die Teil eines Hydraulikkreislaufs ist, mit einer Hydraulikpumpe 16 verbunden, die über eine mechanische Wirkverbindung M₃ abtriebsseitig mechanisch mit dem Verteilergetriebe 9 gekoppelt ist. Der Dieselmotor 8 treibt demzufolge über die mechanische Wirkverbindung M₁ und über das Verteilergetriebe 9 nicht nur die beiden Generatoren 10, sondern auch den Hydraulikantrieb für die Heckfräse 5 an. Eine Abtriebswelle des Verteilergetriebes 9 ist an eine Pumpenwelle der Hydraulikpumpe 16 angeflanscht, die durch Rotation den nötigen Hydraulikdruck erzeugt, um den Hydraulikmotor 14 über die Hydraulikleitung H₁ zu speisen und anzutreiben. Dem Hydraulikantrieb ist in nicht näher dargestellter Weise eine Steuerung zugeordnet, die den durch den Hydraulikmotor 14 gebildeten Fräsenantrieb steuert. Der Fräsenantrieb bildet einen Funktionsantrieb im Sinne der Erfindung.

Dem Hydraulikantrieb ist in nicht näher dargestellter Weise eine Sensorik zugeordnet, die abhängig von Fahrparametern oder anderen Funktionsparametern der Pistenraupe eine Regelung des Hydraulikantriebs 14 ermöglicht.

Wenn die Fahrmotoren 13 als elektrische Generatoren wirken, insbesondere bei Bergabfahrt der Pistenraupe, dann wird Strom über die Steuerleitungen S₃ und die Leistungselektronik 12 sowie die Steuerleitungen S₁ den Generatoren 10 zugeführt, die dann in umgekehrter Richtung als Motoren wirken und über die mechanische Abstützung am Verteilergetriebe 9, d.h. über die mechanischen Wirkverbindungen M₂, das Verteilergetriebe 9 antreiben. Das wiederum führt dazu, dass eine durch die als Motoren wirkenden Generatoren 10 in das Verteilergetriebe 9 eingeleitete mechanische Kraftübertragung über die mechanische Wirkverbindung M₃ die Hydraulikpumpe 16 des Hydraulikantriebs antreibt, so dass bei Funktion der Fahrmotoren 13 als Generatoren der Hydraulikantrieb für die Heckfräse betrieben werden kann. Entsprechende elektrische Energie muss daher nicht mehr oder nicht mehr in so starkem Maße wie beim Stand der Technik in wenigstens einem nicht dargestellten Brems-Chopper abgepuffert werden, da entsprechende, durch die Fahrmotoren 13 im Generatorbetrieb erzeugte elektrische Energie über die Generatoren und die mechanischen Wirkverbindungen M₂ in mechanische Energie umgewandelt wird, die mittels des Verteilergetriebes 9 und der mechanischen Wirkverbindung M₃ die Hydraulikpumpe 16 betreiben. Da ein entsprechender Brems-Chopper somit weniger elektrische Energie abpuffern muss, reduziert sich zwangsläufig auch eine Kühlleistung des Brems-Choppers, die durch den Dieselmotor 8 aufgebracht werden muss. Dies führt zwangsläufig zu einem reduzierten Kraftstoffverbrauch des Dieselmotors 8 und demzufolge insgesamt zu einem geringeren Energieverbrauch der Pistenraupe.

## Patentansprüche

1. Pistenraupe (1) mit einem Verbrennungsmotor sowie mit zwei zueinander parallel geschalteten elektrischen Generatoren (10) mit gleicher Leistung, die mittels einer Leistungselektronik (12) mit elektrischen Fahrmotoren (13) für einen Kettenantrieb verbunden sind, sowie mit wenigstens einem Funktionsantrieb für eine Heckfräse (5) oder eine Winde, wobei die Generatoren (10) mechanisch mit einem Verteilergetriebe (9) gekoppelt sind, **dadurch gekennzeichnet, dass** der Funktionsantrieb hydraulisch ausgeführt und mit dem Verteilergetriebe (9) verbunden ist, und dass dem Verbrennungsmotor das Verteilergetriebe (9) zugeordnet ist, an dem abtriebsseitig mechanisch die Generatoren (10) sowie eine Hydraulikpumpe (16) des hydraulischen Funktionsantriebs angeschlossen sind.

2. Pistenraupe nach Anspruch 1, **dadurch gekennzeichnet, dass** der hydraulische Funktionsantrieb wenigstens einen Hydraulikmotor (14) aufweist, der einer Fräswellenanordnung der Heckfräse (5) für einen rotatorischen Antrieb der Fräswellenanordnung zugeordnet ist.

## Claims

1. Snow groomer (1) having an internal combustion engine and also having two electrical generators (10) which are connected to one another in parallel and have the same power and are connected to electric traction motors (13) for a chain drive by means of a power electronics system (12), and also having at least one functional drive for a rear cutter (5) or a winch, wherein the generators (10) are mechanically coupled to a transfer box (9), **characterized in that** the functional drive is hydraulic and is connected to the transfer box (9), and **in that** the transfer box (9) is associated with the internal combustion engine, the generators (10) and also a hydraulic pump (16) of the hydraulic functional drive being mechanically connected to the output end of said transfer box.

2. Snow groomer according to Claim 1, **characterized in that** the hydraulic functional drive has at least one hydraulic motor (14) which is associated with a cutting shaft arrangement of the rear cutter (5) for driving the cutting shaft arrangement in rotation.

## Revendications

1. Engin de damage de pistes (1), comprenant un moteur à combustion interne ainsi que deux générateurs électriques (10) de même puissance, montés en parallèle l'un avec l'autre, qui sont reliés au moyen d'une électronique de puissance (12) à des moteurs de traction électriques (13) pour un entraînement par chenilles, ainsi que comprenant au moins un entraînement fonctionnel pour une fraise arrière (5) ou un treuil, les générateurs (10) étant couplés mécaniquement à une boîte de transfert (9),
**caractérisé en ce que** l'entraînement fonctionnel est réalisé de manière hydraulique et est relié à la boîte de transfert (9), et **en ce qu'**au moteur à combustion interne est associée la boîte de transfert (9) à laquelle les générateurs (10) ainsi qu'une pompe hydraulique (16) de l'entraînement fonctionnel hydraulique sont raccordés mécaniquement côté sortie.

2. Engin de damage de pistes selon la revendication 1, **caractérisé en ce que** l'entraînement fonctionnel hydraulique présente au moins un moteur hydraulique (14) qui est associé à un ensemble de tambour de fraise de la fraise arrière (5) pour un entraînement en rotation de l'ensemble de tambour de fraise.
